# EUROPÄISCHE PATENTSCHRIFT

(11) **EP 2 068 751 B1**
(45) Veröffentlichungstag und Bekanntmachung des Hinweises auf die Patenterteilung: **19.09.2018**
(21) Anmeldenummer: 07816172.6
(22) Anmeldetag: 28.09.2007
(51) Int. Cl.: A61C 8/00

(54) **VERANKERUNG ZUR BEFESTIGUNG EINES ZAHNERSATZES**
ANCHOR FOR SECURING A TOOTH REPLACEMENT
ANCRAGE POUR LA FIXATION D'UNE PROTHÈSE DENTAIRE

(30) Priorität: 02.10.2006 CH 15632006
(43) Veröffentlichungstag der Anmeldung: 17.06.2009
(73) Patentinhaber: Cendres + Métaux SA, 2504 Biel (CH)
(72) Erfinder: AUDERSET, Adrian, 2560 Nidau (CH); BLASER, Daniel, 3250 Lyss (CH); BLUEMLI, Markus, 2503 Biel/Bienne (CH); STRAZZA, Mathias, CH-2554 Meinisberg (CH); COOPER, Gary, 2554 Meinisberg (CH); MOCK, Elmar, 2013 Colombier (CH); KLOPFENSTEIN, André, 2520 La Neuveville (CH)
(74) Vertreter: AMMANN PATENTANWÄLTE AG BERN
(86) Internationale Anmeldenummer: PCT/CH2007/000481
(87) Internationale Veröffentlichungsnummer: WO 2008/040134

(56) Entgegenhaltungen:
- EP-A1- 0 216 031
- EP-A1- 0 580 945
- EP-A1- 1 201 200
- FR-A1- 2 655 534
- US-A- 3 732 621
- US-A- 5 178 539
- US-A1- 5 302 125
- US-A1- 2006 046 229

## Beschreibung

Die vorliegende Erfindung bezieht sich auf eine Verankerung zur Befestigung eines Zahnersatzes gemäss Oberbegriff des Anspruchs 1.
Verankerungen zur Befestigung eines Zahnersatzes auf Implantaten sind z.B. aufgrund der Knochenverhältnisse oft nicht in der Idealrichtung im Mund anbringbar. Soll z.B. mittels der Verankerung eine Zahnprothese befestigt werden, so kann die Längsrichtung der Verankerung von der Einschubrichtung der Zahnprothese abweichen. Diese Winkelabweichung wird auch Divergenz genannt.
Aus der Patentschrift US 3 732 621 ist es bekannt, das Verankerungsteil mit einem Schwenkteil zu versehen. Dadurch ist es nach Anbringen des Verankerungsteils möglich, das Schwenkteil genau auszurichten und eine etwaige Divergenz auszugleichen. Zur Befestigung des Schwenkteils in einer bestimmten Verschwenklage sind mechanische Befestigungsmittel vorgesehen. Derartige Mittel haben u.a. den Nachteil, dass der Aufbau der Verankerung relativ kompliziert ist. Auch besteht die Gefahr, dass das Schwenkteil sich aus der eingestellten Verschwenklage löst und ein sicherer Halt des Zahnersatzes nicht mehr gewährleistet ist.

Die EP 580 945 A1 offenbart einen Implantatpfosten, der an seinem koronalen Ende einen zur koronalen Seite im wesentlichen eben abgeflachten Teilkugelkopf aufweist, dessen Durchmesser größer ist als der Durchmesser eines zwischen einem zervikalen Gewindeabschnittes und dem Teilkugelkopf gelegenen Implantatpfostenschaftes. Der Befestigungskopf weist an seinem zervikalen Ende eine Teilkugelschale auf, die den Teilkugelkopf des Implantatpfostens umgreift und an ihrem zervikalen Ende eine von dem gewindefreien Implantatpfostenschaft durchsetzbare Schwenköffnung aufweist, deren Durchmesser kleiner als der Durchmesser des Teilkugelkopfes jedoch größer als der Außendurchmesser des Implantatpfostenschaftes ist.
Der Teilkugelkopf und die Teilkugelschale sind mit zueinander komplementären Mitnehmereinrichtungen zur kardanischen Verbindung des Befestigungskopfes mit dem Implantatpfosten versehen. Diese Offenbarung sieht dabei auch vor, dass eine zwischen der im wesentlichen ebenen koronalen Stirnfläche des Teilkugelkopfes und der Innenwandung der Teilkugelschale gebildete Kernkammer nach dem Einschrauben des Implantatpfosten mit einem härtbaren Zement oder dergleichen ausfüllbar ist.

Die US 5, 302, 125 offenbart eine Verankerung zur Befestigung eines Zahnersatzes gemäß dem Oberbegriff des Anspruchs 1. Ausgehend von diesem Stand der Technik liegt eine Aufgabe der vorliegenden Erfindung darin, die bekannte Verankerung so weiterzuentwickeln, dass sie einen vereinfachteren Aufbau aufweist.
Eine Verankerung, die diese Aufgabe löst, ist im Anspruch 1 angegeben. Die weiteren Ansprüche geben bevorzugte Ausführungen und ein Hilfsinstrument an. Die erfindungsgemässe Verankerung umfasst Mittel zum Anbringen einer aushärtbaren Substanz in der Ausnehmung des Verankerungsteils. Dadurch kann mit einem relativ einfachen Aufbau das Schwenkteil sicher in einer bestimmten Schwenklage fixiert werden.

Die Erfindung wird im Folgenden anhand eines bevorzugten Ausführungsbeispiels unter Bezugnahme auf Figuren erläutert. Es zeigen
Fig. 1 eine perspektivische Ansicht der erfindungsgemässen Verankerung vor der Montage;
Fig. 2 eine Draufsicht des Verankerungsteils der Verankerung gemäss Fig. 1;
Fig. 3 das Verankerungsteil in einem Schnitt gemäss der Linie III-III in Fig. 2 ;
Fig. 4 eine perspektivische Ansicht des Schwenkteils der Verankerung gemäss Fig. 1;
Fig. 5 eine Unteransicht des Schwenkteils gemäss Fig. 4;
Fig. 6 eine Draufsicht des Schwenkteils gemäss Fig. 4;
Fig. 7 das Schwenkteil in einem Schnitt gemäss der Linie VII-VII in Fig. 5;
Fig. 8 die zusammengefügte Verankerung gemäss Fig. 1, wobei das Verankerungsteil gemäss der Linie III-III in Fig. 2 und das Schwenkteil gemäss der Linie VII-VII in Fig. 5 geschnitten sind;
Fig. 9 die Verankerung gemäss Fig. 8 nach Drehung des Schwenkteils um 90 Grad;
Fig. 10 eine perspektivische Ansicht einer Anordnung mit der Verankerung gemäss Fig. 9 und einem aufgesetzten Hilfsinstrument;
Fig. 11 die Anordnung gemäss Fig. 10 geschnitten gemäss der Linie XI-XI in Fig. 12, wobei die Schnittebene XI-XI, in welcher die Verankerung geschnitten ist, ebenfalls in Fig. 9 angegeben ist;
Fig. 12 eine Draufsicht der Anordnung gemäss Fig. 10;
Fig. 13 die Anordnung gemäss Fig. 10 zusammen mit einer Einfüllspritze nach Schwenken des Schwenkteils;
Fig. 14 eine teilweise geschnittene Detailansicht der Anordnung gemäss Fig. 13;
Fig. 15 die Verankerung gemäss Fig. 14 zusammen mit einer aufgesetzten Matrize; und
Fig. 16 einen Schnitt von Fig. 15 in derselben Schnittebene wie Fig. 14.

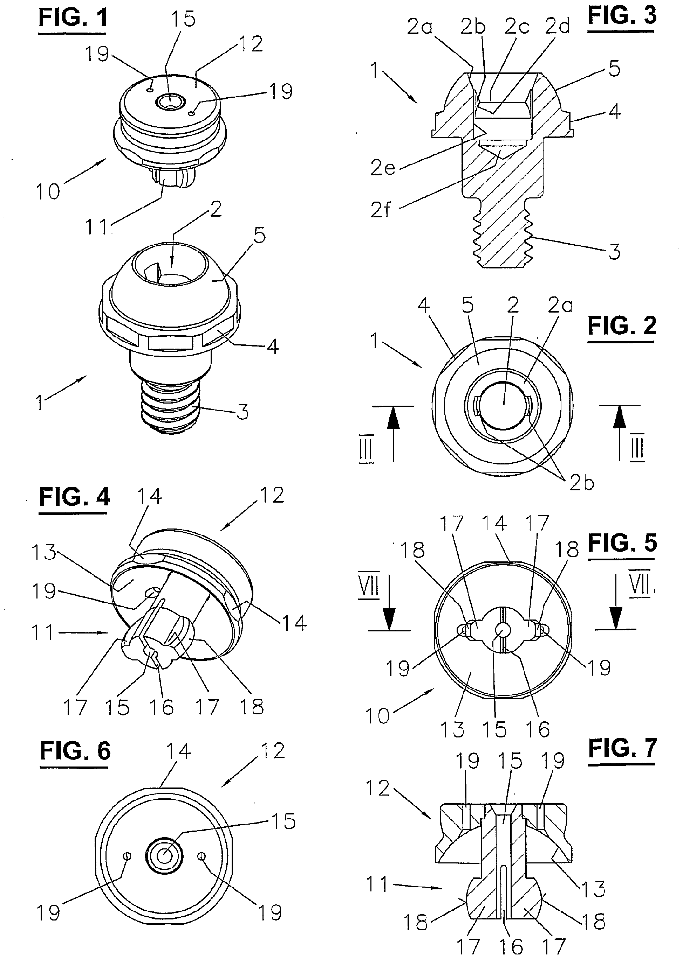

Die in Fig. 1 gezeigte Verankerung umfasst ein Verankerungsteil 1, welches an einem Implantat fixierbar ist (nicht dargestellt), und ein Schwenkteil 10, an welchem ein Zahnersatz (nicht dargestellt), beispielsweise eine Zahnprothese befestigbar ist. Das Schwenkteil 10 enthält einen Stift 11, der in einer Ausnehmung 2 im Verankerungsteil 1 aufnehmbar ist.

Das Verankerungsteil 1 umfasst einen Zapfen 3 mit einem Gewinde und einen Verankerungskopf, der einen als Vielkant 4 ausgebildeten Rand aufweist, welcher mit einem geeigneten Werkzeug in Eingriff gebracht werden kann, um das Verankerungsteil 1 in einem Implantat einschrauben und festziehen zu können.

Wie auch in den Fig. 2 und 3 gezeigt, weist der Verankerungskopf eine sphärische Aussenfläche 5 auf, welche von der Ausnehmung 2 durchbrochen ist. Die Ausnehmung 2 ist durch eine sich zum basalen Ende des Verankerungsteils 1 hin verjüngende Anschlagsfläche 2a begrenzt, an welche eine sphärische Innenfläche 2d angrenzt, die in eine zylindrische Innenfläche 2e übergeht.

Die Anschlagsfläche 2a ist konisch ausgebildet, sie kann jedoch auch eine andere Form haben. Die Anschlagsfläche 2a definiert den maximalen Schwenkwinkel, um welchen das Schwenkteil 10 gegenüber der Längsachse des Verankerungsteils 1 schwenkbar ist. Im vorliegenden Beispiel beträgt dieser maximale Schwenkwinkel 20 Grad. Je nach Anwendungszweck kann die Anschlagsfläche 2a anders ausgebildet sein, wobei der maximale Schwenkwinkel vorzugsweise im Bereich von 10 Grad bis 30 Grad liegt.

Das basale Ende 2f der Ausnehmung 2 ist im hier gezeigten Beispiel bedingt durch die Fabrikation des Verankerungsteils 1 durch eine konische Fläche begrenzt. Das Ende 2f kann jedoch beliebig ausgebildet sein.

Der Übergang zwischen der Anschlagsfläche 2a und der sphärischen Innenfläche 2d bildet eine Verengung 2c, welche das Herausfallen des Schwenkteils 10 verhindert, wenn der Stift 11 des Schwenkteils 10 in die Ausnehmung 2 greift. Die Verengung 2c ist an zwei gegenüberliegenden Stellen jeweils von einer Aussparung 2b durchbrochen. Die Aussparungen 2b ermöglichen es, das Ende des Stiftes 11 in den von der Verengung 2c begrenzten Innenraum der Ausnehmung 2 einzufügen.

Die Ausgestaltung des Schwenkteils 10 ist in den Fig. 4 - 7 genauer ersichtlich. Das Schwenkteil 10 umfasst einen Schwenkkopf 12, in dessen Mitte der Stift 11 angebracht ist. Die Unterseite des Schwenkkopfes 12 ist durch eine sphärische Fläche 13 gebildet, welche nach der Montage auf der Aussenfläche 5 des Verankerungsteils 1 aufliegt und somit als Kugelpfanne wirkt. Die Fläche 13 ist konkav ausgebildet. Die Oberseite des Schwenkkopfs 12 ist an die gewünschte Art der Verbindung mit dem Zahnersatz angepasst. Im vorliegenden Fall ist der Schwenkkopf 12 so ausgebildet, dass der Zahnersatz mittels einer Matrize an diesem lösbar befestigbar ist. Der Schwenkkopf 12 weist am Seitenrand abgeflachte Stellen 14 auf. Dadurch kann das Schwenkteil 10 drehfest mit einem geeigneten Montageinstrument verbunden und am Verankerungsteil 1 angebracht werden.

Die Montage des Schwenkteils 10 am Verankerungsteil 1 ist auch mittels eines Montageinstruments in Form einer Zange mit zwei Stiften möglich, welche in die Bohrungen 19 im Schwenkkopf 12 einfügbar sind. Wird dieser Art der Montage bevorzugt, so können die abgeflachten Stellen 14 am Schwenkkopf 12 weggelassen sein.

Der Stift 11 weist eine durchgehende Bohrung 15 auf, so dass von einer Einlassöffnung am Schwenkkopf 12 bis zum Ende des Stifts 11 ein Innenkanal gebildet ist. Durch diesen Innenkanal 15 kann von aussen ein Befestigungsmittel in Form einer aushärtbaren Substanz in die Ausnehmung 2 geleitet und so das Schwenkteil 10 in der gewünschten Schwenklage am Verankerungsteil 1 fixiert werden. Das Ende des Stiftes 11 ist mit einem Schlitz 16 und zwei gegenüberliegenden Vorsprüngen in Form von Flügeln 17 versehen. Die Aussenseiten der Flügel 17 umfassen sphärische Flächen 18 und wirken nach der Montage mit der sphärischen Innenfläche 2d des Verankerungsteils 1 zusammen. Der Schwenkkopf 12 ist mit durchgehenden Bohrungen 19 versehen, welche als Innenkanäle für die Entlüftung sowie zur Kontrolle dienen, ob zur Fixation des Schwenkteils 10 genügend Befestigungsmittel eingeleitet worden ist.

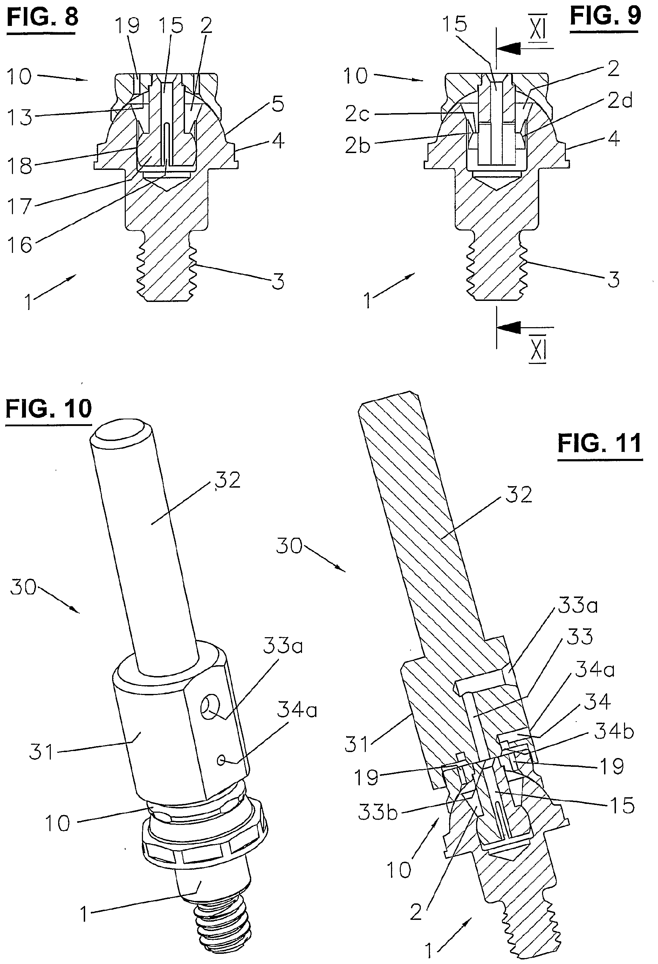

Die Verankerung wird im Mund angebracht, indem das Verankerungsteil 1 in das Implantat eingeschraubt und dann das Schwenkteil 10 eingefügt wird. Dazu wird dieses in Bezug auf das Verankerungsteil 1 so orientiert, dass die Flügel 17 in den Aussparungen 2b zu liegen kommen und über die Verengung 2c hinweg in den Innenraum der Ausnehmung 2 eingeschoben werden können (vgl. Fig. 8). Bevor das Schwenkteil 10 in die gewünschte Schwenklage gebracht wird, wird dieses zuerst um die Längsachse des Stiftes 11 um einen bestimmten Winkel gedreht, beispielsweise 90 Grad (vgl. Fig. 9). Dieses vorgängige Drehen vermindert die Gefahr, dass beim Einstellen der Schwenklage die Flügel 17 unbeabsichtigterweise wieder in den Aussparungen 2b zu liegen kommen und das Schwenkteil 10 unter Umständen vom Verankerungsteil angehoben wird, sodass die Fläche 13 nicht mehr auf der Kugelfläche 5 aufliegt.

Durch Vorsehen des Schlitzes 16 ist das Ende des Stiftes 11 elastisch ausgebildet, sodass die Flügel 17 zusammendrückbar sind und ohne Mühe in den von der Verengung 2c begrenzten Innenraum der Ausnehmung 2 einfügbar sind. Der maximale Durchmesser des Endes des Stiftes 11 ist etwas grösser als der Durchmesser der Kugel gewählt, auf welcher die Innenfläche 2d liegt. Die Flügel 17 drücken somit gegen die Wand der Ausnehmung 2 und erzeugen so eine Vorspannung, welche bewirkt, dass das Schwenkteil 10 nicht völlig lose am Verankerungsteil 1 angebracht ist. Dadurch ist gewährleistet, dass sich die Schwenklage des Schwenkteils 10 nur dann ändert, wenn auf dieses eine bestimmte Kraft zum Schwenken ausgeübt wird.

Befindet sich das Schwenkteil 10 in der gewünschten Schwenklage wird ein Befestigungsmittel durch den Innenkanal 15 in die Ausnehmung 2 geleitet. Als Befestigungsmittel eignen sich gängige aushärtbare Substanzen, z.B. Substanzen auf Polymerbasis, insbesondere ein Polymerisat, gängige Füllungsmaterialien, insbesondere solche mit metallischer oder keramischer Kernstruktur oder solche auf Polymerbasis, Adhesive, etc. Das Einleiten wird gestoppt, wenn das Befestigungsmittel aus den Öffnungen der Bohrungen 19 tritt. Nach Aushärten des Befestigungsmittels ist das Schwenkteil 10 fest in seiner Schwenklage fixiert.

Durch das Vorsehen eines Schwenkteils 10 mit einem Stift 11, welcher in die Ausnehmung 2 im Verankerungsteil 1 greift, kann ein kompaktes Gelenk gebildet werden, welches insbesondere einen niederen Aufbau aufweist. Im vorliegenden Beispiel weist das Gelenk drei Freiheitsgrade auf. Die Fläche 13 der Unterseite des Schwenkteils 10 sowie die Aussenfläche 5 des Verankerungsteils 1 befinden sich im Wesentlichen auf einer Kugel mit Radius R und die Innenfläche 2d des Verankerungsteils 1 sowie die Flächen 18 der Flügel 17 befinden sich im Wesentlichen auf einer Kugel mit Radius r, wobei die beiden Kugeln das gleiche Zentrum haben und r kleiner als R ist.

Wie aus den Fig. 8, 9 und 14 ersichtlich, ist die Unterseite 13 des Schwenkkopfs 12 genügend ausladend ausgebildet, sodass dieser die Ausnehmung 2 überdeckt, selbst wenn das Schwenkteil 10 maximal verschwenkt ist.

Verankerungsteil 1 und Schwenkteil 10 sind aus einem biokompatiblen Material gefertigt, z.B. Metall wie Titan, Keramik, Kunststoff oder einem anderen im Dentalbereich verwendbaren Material. Das Verankerungsteil 1 und das Schwenkteil 10 bilden jeweils ein Teil, welches aus einem Stück gefertigt oder aus mehreren Stücken zusammengefügt ist.

Bei Bedarf ist die Klebefläche des Verankerungsteils 1 und/oder Schwenkteils 10, welche in Kontakt mit dem Befestigungsmittel kommt, konditioniert, um eine innige Verbindung der Klebefläche mit dem Befestigungsmittel zu bewirken. Eine Konditionierung ist z.B. durch Sandstrahlen der Klebefläche oder eine andere Art der Oberflächenbehandlung erzielbar.

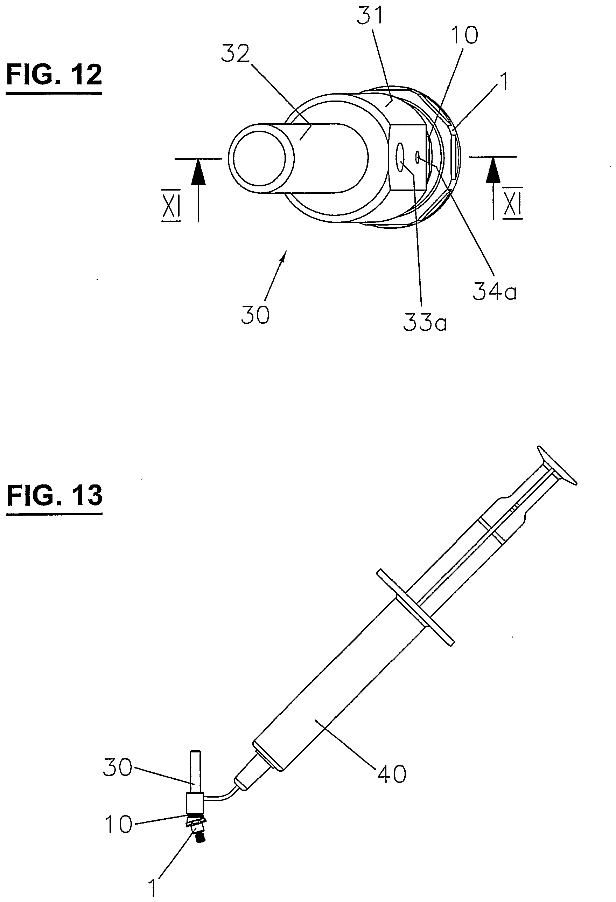

Zur Erleichterung der Montage des Schwenkteils 10 ist optional ein Hilfsinstrument 30 vorgesehen, welches in den Fig. 10 bis 12 dargestellt ist. Das Hilfsinstrument 30 umfasst einen Einleitkopf 31, welcher auf das Schwenkteil 10 aufsetzbar und mit diesem verbindbar ist, sowie ein gerades Ende 32, welches zur optischen Orientierung dient. Das Ende 32 ist genügend lang gewählt, sodass die Gesamtlänge des Hilfsinstruments länger ist als die Länge des Verankerungsteils 1. Das Ende 32 ist zylindrisch und starr ausgebildet und kann bei Bedarf so ausgelegt sein, dass es als Einsatz in einem Parallelometer geeignet ist.

Der Einleitkopf 31 ist seitlich mit einer Einlassöffnung 33a sowie an der Unterseite mit einer Auslassöffnung 33b versehen. Einlass- und Auslassöffnung 33a, 33b sind über einen Einleitkanal 33 fluidisch miteinander verbunden. Der Einleitkopf 31 umfasst benachbart zur Einlassöffnung 33a eine Entlüftungsöffnung 34a, welcher über einen Entlüftungskanal 34 mit einer Öffnung 34b an der Unterseite des Einleitkopfes 31 fluidisch verbunden ist. Die Unterseite des Einleitkopfes 31 ist abgestuft ausgebildet, sodass nach Aufsetzen des Hilfsinstruments 30 auf das Schwenkteil 10 die Einlassöffnung 33a mit dem Innenkanal 15 und die beiden Innenkanäle 19 des Schwenkteils 10 mit der Öffnung 34b des Einleitkopfes 31 verbunden sind. Der Rand des Einleitkopfes 30 ist so ausgebildet, dass er lösbar mit dem Schwenkteil 10 verbindbar ist, z.B. durch Bildung einer Schnappverbindung.

Zum Ausrichten des Schwenkteils 10 wird das Hilfsinstrument 30 aufgesetzt und dieses solange verschwenkt, bis das Ende 32 in die gewünschte Richtung zeigt, um eine etwaige Divergenz auszugleichen. Diese Richtung entspricht der Einschubrichtung, wenn eine herausnehmbare Zahnprothese an der Verankerung angebracht werden soll. Anschliessend wird eine Applizierhilfe, beispielsweise eine Einfüllspritze 40, welche das Befestigungsmittel enthält, auf die Einlassöffnung 33a gesetzt und das Befestigungsmittel eingeleitet, bis es über den Einleitkanal 33 zum Innenkanal 15 gelangt und schliesslich aus der Entlüftungsöffnung 34a austritt.

Das Hilfsinstrument 30 ist als ein Teil ausgebildet und z.B. aus Kunststoff und/oder Metall gefertigt.

Optional kann das Hilfsinstrument 30 nur zum Ausrichten des Schwenkteils 10 verwendet werden. In diesem Fall brauchen der Kanal 33 mit den Öffnungen 33a und 33b sowie der Kanal 34 mit den Öffnungen 34a und 34b nicht vorgesehen sein. Zur Montage des Schwenkteils 10 wird zuerst das Befestigungsmittel durch den Innenkanal 15 in die Ausnehmung 2 geleitet. Anschliessend wird der Kopf 31 des Hilfsinstruments 30 auf das Schwenkteil 10 aufgesetzt und dieses in die gewünschte Schwenklage gebracht.

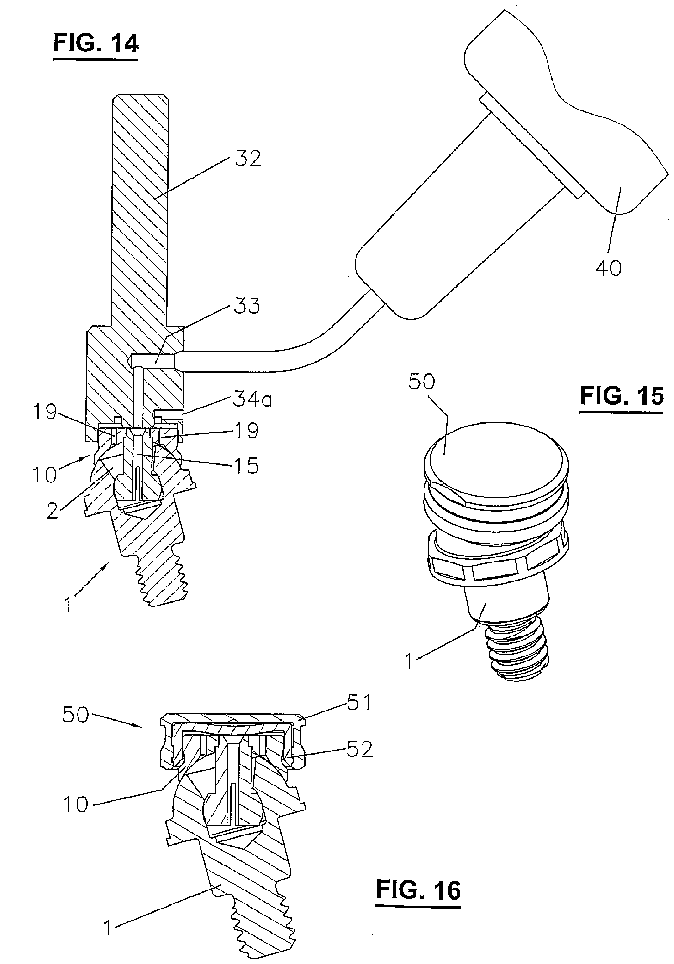

Im hier gezeigten Ausführungsbeispiel bilden das Verankerungsteil 1 und das Schwenkteil 10 eine Patrize, an welcher der Zahnersatz mittels einer Matrize befestigbar ist. Fig. 15 und 16 zeigen eine Verankerung mit einer aufgesetzten Matrize 50. Diese umfasst ein Matrizengehäuse 51 und einen Einsatz 52. Matrize 50 und Patrize 1, 10 sind so ausgebildet, dass sie mittels einer Schnappverbindung aneinander haften.

Die Matrize 50 oder Matrizen 50, wenn mehrere Verankerungen vorhanden sind, werden fest mit dem Zahnersatz, z.B. einer Zahnprothese durch gängige Verfahren wie Einpolymerisieren befestigt. Der Zahnarzt kann diesen Arbeitsvorgang auch direkt am Patienten vornehmen, indem er die Matrizen auf die im Mund fixierten Patrizen anbringt, den für die Matrizen notwendigen Hohlraum in der Zahnprothese herausschleift und diese schliesslich mittels Polymerisat oder anderen bekannten Verarbeitungsmethoden befestigt. Eine besonders einfache Art der Befestigung ergibt sich, wenn die Zahnprothese mit geeigneten Öffnungen versehen ist, so dass das Polymerisat direkt über die Öffnungen zwischen der aufgesetzten Prothese und den Matrizen eingeleitet werden kann.

Die Oberseite des Schwenkteils 10 und die Matrize 50 müssen nicht unbedingt so ausgebildet sein, wie in den Fig. 15 und 16 dargestellt, sondern können an den gewünschten Anwendungszweck angepasst sein. Es ist auch denkbar, das Schwenkteil 10 so auszubilden, dass daran eine Prothese festsitzend und/oder ein künstlicher Zahn anbringbar ist.

Aus der vorangehenden Beschreibung sind dem Fachmann zahlreiche Abwandlungen zugänglich, ohne den Schutzbereich der Erfindung zu verlassen, der durch die Ansprüche definiert ist.

So wird das hier gezeigte Verankerungsteil 1 in einer Vertiefung im Implantat eingeschraubt und bildet somit einen Implantataufbau. Das Verankerungsteil kann jedoch entsprechend dem Anwendungszweck angepasst sein. So ist es z.B. möglich, das Verankerungsteil 1 als Implantat auszugestalten, welches direkt im Kieferknochen anbringbar ist.

Um die aushärtbare Substanz von aussen in die Ausnehmung 2 einbringen zu können, ist es auch denkbar, das Verankerungsteil 1 mit einem Innenkanal von der Art des Innenkanals 15 zu versehen.

Anstelle von Innenkanälen sind auch andere Mittel möglich, um die aushärtbare Substanz in der Ausnehmung 2 anzubringen. Beispielsweise können die Mittel eine Substanz umfassen, welche sich in der Ausnehmung 2 des Verankerungsteils 1 befindet und welche aktivierbar ist, um die aushärtbare Substanz zu bilden. Eine geeignete aktivierbare Substanz ist z.B. ein Lot oder ein Kunststoff, welches bzw. welcher in der Ausnehmung 2 integriert und durch Erwärmung aktivierbar ist. Bei der Aktivierung geht die Substanz in die flüssige Phase über. Das Schwenkteil 10 kann dann in die gewünschte Lage gebracht werden und ist nach Erkalten der Substanz fixiert.

Die aktivierbare Substanz kann auch in Form von zwei oder mehr Komponenten ausgebildet sein, welche zuerst voneinander getrennt in der Ausnehmung 2 aufgenommen sind und durch anschliessendes Mischen aktiviert werden, sodass eine aushärtbare Substanz gebildet wird. Das Mischen kann z.B. durch Einfügen des Schwenkteils 10 in das Verankerungsteil 1 und anschliessendes Verdrehen erfolgen.

## Patentansprüche

1. Verankerung zur Befestigung eines Zahnersatzes,
umfassend ein an einem Implantat oder Kiefer befestigbares Verankerungsteil (1) mit einer Ausnehmung (2)
und ein Schwenkteil (10), an welchem der Zahnersatz befestigbar ist und welches einen Stift (11) enthält, wobei
das Schwenkteil als Ganzes in Bezug auf das Verankerungsteil schwenkbar ist, wenn der Stift in der Ausnehmung aufgenommen ist, **dadurch gekennzeichnet, dass**
die Verankerung Mittel (15, 19) zum Anbringen einer aushärtbaren Substanz in der Ausnehmung (2) des Verankerungsteils (1) umfasst, um das Schwenkteil in einer bestimmten Schwenklage zu fixieren, wobei die Mittel (15, 19) mindestens einen Innenkanal (15) umfassen, durch welchen die aushärtbare Substanz von aussen in die Ausnehmung (2) des Verankerungsteils (1) leitbar ist und welcher im Schwenkteil (10) oder Verankerungsteil (1) gebildet ist.

2. Verankerung nach einem der vorangehenden Ansprüche, wobei die Ausnehmung (2) zum Halten des Stiftes (11) eine Verengung (2c) umfasst, die vorzugsweise mindestens eine Aussparung (2b) aufweist, durch welche (2c) das Ende des Stifts einführbar ist.

3. Verankerung nach einem der vorangehenden Ansprüche, wobei das Schwenkteil (10) Vorspannmittel (16) umfasst, welche nach Anbringen des Schwenkteils am Verankerungsteil (1) bewirken, dass das Ende des Stifts (11) gegen die Wand der Ausnehmung (2) drückt.

4. Verankerung nach einem der vorangehenden Ansprüche, wobei das Ende des Stifts (11) geschlitzt (16) ist und/oder zwei Flügel (17) umfasst.

5. Verankerung nach einem der vorangehenden Ansprüche, welche mindestens einen in der Ausnehmung (2) mündenden Entlüftungskanal (19) umfasst, der vorzugsweise im Schwenkteil (10) gebildet ist.

6. Verankerung nach einem der vorangehenden Ansprüche, wobei die Mittel eine Substanz umfassen, welche sich in der Ausnehmung (2) des Verankerungsteils (1) befindet und welche aktivierbar ist, um die aushärtbare Substanz zu bilden.

7. Verankerung nach einem der vorangehenden Ansprüche, wobei zur Bildung des Schwenkgelenks zwischen dem Verankerungsteil (1) und dem Schwenkteil (10)
die Oberseite des Verankerungsteils eine erste sphärische Fläche (5) umfasst und die Ausnehmung (2) durch eine zweite sphärische Fläche (2d) begrenzt ist und
die Unterseite des Schwenkteils eine erste sphärische Gegenfläche (13) und der Stift (11) mindestens eine zweite sphärische Gegenfläche (18) umfasst, wobei
nach Anbringen des Schwenkteils am Verankerungsteil die erste Gegenfläche (13) mit der ersten Fläche (5) und die zweite Gegenfläche (18) mit der zweiten Fläche (2d) in Kontakt steht.

8. Verankerung nach einem der vorangehenden Ansprüche, mit einer Matrize (50), welche zur lösbaren Befestigung des Zahnersatzes am Schwenkteil (10) dient, wobei die Matrize und das Schwenkteil mittels einer Schnappverbindung verbindbar sind und/oder die Matrize einen Einsatz (52) aus Kunststoff oder Metall umfasst.

9. Verankerung nach einem der vorangehenden Ansprüche, wobei das Schwenkteil (10) aus einem Stück gefertigt ist.

10. Verankerung nach einem der vorangehenden Ansprüche und ein Hilfsinstrument (30) zum Montieren einer derartigen Verankerung, wobei das Hilfsinstrument (30)
einen Einleitkopf (31) aufweist, welcher einen Einleitkanal (33) umfasst und auf das Schwenkteil (10) aufsetzbar ist, um durch den Einleitkanal die aushärtbare Substanz in die Aussparung (2) des Verankerungsteils (1) einzuleiten, und/oder ein gerades Ende (32) zur Erfassung der Schwenklage des Schwenkteils (10), wobei die Länge des Endes vorzugsweise grösser als 5 mm ist.

## Claims

1. Anchor for securing a tooth replacement,
comprising an anchoring part (1) which can be secured to an implant or jaw and which has a recess (2)
and a pivoting part (10) to which the tooth replacement can be secured and which contains a pin (11), wherein
the pivoting part is pivotable as a whole relative to the anchoring part when the pin is received in the recess, **characterized in that**
the anchor comprises means (15, 19) for applying a hardenable substance in the recess (2) of the anchoring part (1) in order to fix the pivoting part in a specific pivoting position, wherein the means (15, 19) comprise at least one internal duct (15) through which the hardenable substance can be introduced into the recess (2) of the anchoring part (1) from outside and which is formed in the pivoting part (10) or the anchoring part (1).

2. Anchor according to any one of the preceding claims, wherein, in order to hold the pin (11), the recess (2) comprises a neck (2c) which preferably has at least one opening (2b) through which (2c) the end of the pin can be inserted.

3. Anchor according to any one of the preceding claims, wherein the pivoting part (10) comprises pretensioning means (16) which, when the pivoting part has been fitted to the anchoring part (1), cause the end of the pin (11) to press against the wall of the recess (2).

4. Anchor according to any one of the preceding claims, wherein the end of the pin (11) is slotted (16) and/or comprises two wings (17).

5. Anchor according to any one of the preceding claims, which comprises at least one ventilation duct (19) which leads into the recess (2) and which is preferably formed in the pivoting part (10).

6. Anchor according to any one of the preceding claims, wherein the means comprise a substance which is located in the recess (2) of the anchoring part (1) and which can be activated in order to form the hardenable substance.

7. Anchor according to any one of the preceding claims, wherein, in order to form the pivot joint between the anchoring part (1) and the pivoting part (10),
the upper side of the anchoring part comprises a first spherical face (5) and the recess (2) is delimited by a second spherical face (2d) and
the underside of the pivoting part comprises a first spherical counter-face (13) and the pin (11) comprises at least a second spherical counter-face (18), wherein,
when the pivoting part has been fitted to the anchoring part, the first counter-face (13) is in contact with the first face (5) and the second counter-face (18) is in contact with the second face (2d).

8. Anchor according to any one of the preceding claims, including a female part (50) which is used for the releasable securing of the tooth replacement to the pivoting part (10), wherein the female part and the pivoting part can be connected by means of a snap connection and/or the female part comprises an insert (52) of plastics material or metal.

9. Anchor according to any one of the preceding claims, wherein the pivoting part (10) is made of one piece.

10. Anchor according to any one of the preceding claims and an auxiliary instrument (30) for mounting such an anchor, wherein the auxiliary instrument (30)
includes an introduction head (31) which comprises an introduction duct (33) and which can be placed on the pivoting part (10) in order to introduce the hardenable substance through the introduction duct into the recess (2) of the anchoring part (1), and/or a straight end (32) for determining the pivoting position of the pivoting part (10), wherein the length of the end is preferably greater than 5 mm.

## Revendications

1. Ancrage pour la fixation d'une prothèse dentaire,
comprenant une partie d'ancrage (1) pouvant être fixée à un implant ou une mâchoire et munie d'un évidement (2)
et une partie orientable (10) à laquelle la prothèse dentaire peut être fixée et qui comporte un tenon (11),
la partie orientable dans son ensemble étant orientable par rapport à la partie d'ancrage lorsque le tenon est logé dans l'évidement, **caractérisé en ce que**
l'ancrage comprend des moyens (15, 19) permettant d'introduire une substance durcissable dans l'évidement (2) de la partie d'ancrage (1) afin de fixer la partie orientable dans une orientation donnée, lesdits moyens (15, 19) comprenant au moins un canal intérieur (15) par lequel la substance durcissable peut être introduite dans l'évidement (2) de la partie d'ancrage (1) depuis l'extérieur et qui est formé dans la partie orientable (10) ou dans la partie d'ancrage (1).

2. Ancrage selon l'une des revendications précédentes, où l'évidement (2) comprend un rétrécissement (2c) pour retenir le tenon (11) qui présente préférablement au moins une échancrure (2b) et par lequel (2c) l'extrémité du tenon est insérable.

3. Ancrage selon l'une des revendications précédentes, où la partie orientable (10) comprend des moyens de précontrainte (16) qui ont pour effet, lorsque la partie orientable a été attachée à la partie d'ancrage, que l'extrémité du tenon (11) presse contre la paroi de l'évidement (2).

4. Ancrage selon l'une des revendications précédentes, où l'extrémité du tenon (11) est fendue (16) et/ou comprend deux ailettes (17).

5. Ancrage selon l'une des revendications précédentes, lequel comprend au moins un canal d'évacuation d'air (19) qui débouche dans l'évidement (2) et est préférablement formé dans la partie orientable (10).

6. Ancrage selon l'une des revendications précédentes, où lesdits moyens comprennent une substance qui se trouve dans l'évidement (2) de la partie d'ancrage (1) et qui peut être activée afin de former la substance durcissable.

7. Ancrage selon l'une des revendications précédentes où, pour former l'articulation orientable entre la partie d'ancrage (1) et la partie orientable (10),
le haut de la partie d'ancrage présente une première surface sphérique (5) et l'évidement (2) est limité par une deuxième surface sphérique (2d), et
le bas de la partie orientable comprend une première surface complémentaire sphérique (13) et le tenon (11) comprend au moins une deuxième surface complémentaire sphérique (18),
la première surface complémentaire (13) étant en contact avec ladite première surface (5) et la deuxième surface complémentaire (18) étant en contact avec la deuxième surface (2d) lorsque la partie orientable a été attachée à la partie d'ancrage.

8. Ancrage selon l'une des revendications précédentes, comprenant une partie femelle (50) qui sert à la fixation détachable de la prothèse dentaire sur la partie orientable (10), la partie femelle et la partie orientable pouvant être reliées au moyen d'une liaison par encliquetage et/ou la partie femelle comprenant un insert (52) en matière synthétique ou en métal.

9. Ancrage selon l'une des revendications précédentes, où la partie orientable (10) est fabriquée en une pièce.

10. Ancrage selon l'une des revendications précédentes et un instrument auxiliaire (30) pour le montage d'un tel ancrage, ledit instrument auxiliaire (30)
présentant une tête d'injection (31) qui comprend un canal d'injection (33) et peut être posée sur la partie orientable (10) afin d'injecter par le canal d'injection ladite substance durcissable dans l'évidement (2) de la partie d'ancrage (1), et/ou une extrémité droite (32) permettant de déterminer l'orientation de la partie orientable (10), la longueur de ladite extrémité étant préférablement supérieure à 5 mm.
